# EUROPEAN PATENT SPECIFICATION

(11) **EP 2 086 244 B1**
(45) Date of publication and mention of the grant of the patent: **23.09.2015**
(21) Application number: 07816897.8
(22) Date of filing: 28.11.2007
(51) Int. Cl.: H04W 88/08, H01Q 21/30

(54) **SIGNAL COMBINATION METHOD, DEVICE AND SYSTEM HAVING DIFFERENT SYSTEM, SAME BAND AND ANTENNA SHARING**
SIGNALKOMBINIERVERFAHREN, GERÄT UND SYSTEM MIT UNTERSCHIEDLICHEM SYSTEM, GLEICHES BAND UND ANTENNENTEILUNG
PROCÉDÉ DE COMBINAISON DE SIGNAUX, DISPOSITIF ET SYSTÈME AYANT UN SYSTÈME DIFFÉRENT, UNE MÊME BANDE ET UN PARTAGE D'ANTENNE

(30) Priority: 19.04.2007 CN 200710097843
(43) Date of publication of application: 05.08.2009
(73) Proprietor: Huawei Technologies Co., Ltd., Longgang District Shenzhen, Guangdong 518129 (CN)
(72) Inventor: PU, Tao, Shenzhen Guangdong 518129 (CN); CHEN, Xiaohong, Shenzhen Guangdong 518129 (CN)
(74) Representative: Thun, Clemens
(86) International application number: PCT/CN2007/003366
(87) International publication number: WO 2008/128403

(56) References cited:
- WO-A1-97/44914
- WO-A1-99/50973
- WO-A1-2005/125045
- CN-A- 1 411 299
- CN-A- 1 852 511
- GB-A- 2 281 663
- US-A1- 2006 229 049
- US-B2- 7 181 175
- "Deployment of UMTS in 900Mhz band", , 31 October 2006 (2006-10-31), pages 1-8, XP055159455, [retrieved on 2014-12-18]

## Description

### FIELD OF THE INVENTION

The present invention relates to the field of communication technology, and in particular to a method and device for signal combination and a different-system same-band antenna-sharing system.

### BACKGROUND

In a different-system same-band antenna-sharing scheme, when downlink signals only occur in a main port or a diversity port of base stations of two systems, the downlink signals may be transmitted by two antenna ports of one bipolar antenna or two unipolar antennas. Uplink signals from the two antenna ports of the one bipolar antenna or the two unipolar antennas may serve as uplink signals of the main port and the diversity port of the two systems respectively.

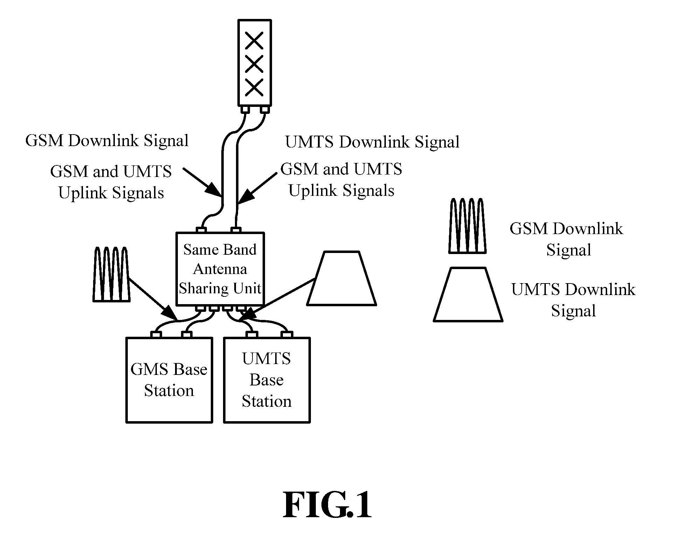

Fig.1 is a schematic diagram showing the implementation of different-system same-band antenna-sharing in the prior art. It is assumed that two systems are the Global System for Mobile Communication (GSM) and the Universal Mobile Telecommunications System (UMTS) respectively, and downlink signals only occur in a main port or a diversity port of the two systems. Thus, the downlink signals in the two systems are transmitted from two antenna units of one bipolar antenna or two unipolar antennas through a same band antenna sharing unit (SASU) respectively.

In the current different-system antenna-sharing scheme, it is required that downlink signals can only occur in one antenna unit in the main port or the diversity port of a base station. If a system needs to output downlink signals through two antenna units, two downlink signals from a main port and a diversity port need to be combined into one signal so as to utilize the different-system same-band antenna-sharing scheme.

In the prior art, a 3dB bridge combiner is used to combine the two downlink signals from the main port and the diversity port into one signal.

However, the 3dB bridge combiner brings large insertion loss to downlink signal, typically about 3.4 dB, which might result in large coverage loss of a base station and is not adapted for the case involving high requirements for downlink signal power. The 3dB bridge combiner can not receive a signal on the diversity port, thus decreasing receiving efficiency for uplink signal. Furthermore, because the 3dB bridge combiner needs to be configured in a base station, the base station must be reconfigured if it is desired for the base station to meet the different-system same-band antenna-sharing scheme.

In summary, at present, in order to meet the different-system same-band antenna-sharing scheme, large coverage loss of a base station is caused, receiving efficiency for uplink signal is decreased and existing base stations must be reconfigured. Moreover, a US patent application with Publication No.2006/0229049 discloses a connection unit which comprises a feeder port for connecting the connection unit to an antenna feeder, a first relay port for connecting the connection unit to a receiving and transmitting port of a first base station, a second relay port for connecting the connection unit to a diversity receiver port of a second base station and a directional coupler for separating signals where a signal in the feeder port is divided into a first output signal in the first reply port of the first base station and a second output signal in the diversity receiver port of a second base station.

### SUMMARY

The present invention is defined by the features of independent claims 1 and 5.

Embodiments of the present invention provide a method and device for signal combination and a different-system same-band antenna-sharing system to solve the problem of causing large coverage loss of a base station for meeting the different-system same-band antenna-sharing scheme in the prior art.

A method for signal combination includes: receiving, by a signal combination device, signals through a base station antenna main port and a base station antenna diversity port of a first base station; filtering, by the signal combination device, a signal received from the base station antenna diversity port of the first base station according to a preset first passband range; filtering, by the signal combination device, a signal received from the base station antenna main port of the first base station according to a preset second passband range; and combining, by the signal combination device, the filtered signal from the base station antenna diversity port of the first base station and the filtered signal from the base station antenna main port of the first base station, and transmitting, by the signal combination device, the combined signal through a main port to a same band antenna sharing unit; receiving, by the SASU, a signal from a second base station through a base station antenna main port of the second base station, wherein the second base station employs a different communication system than the first base station; and transmitting, by the SASU, a signal through an antenna shared by the first base station and the second base station, wherein the signal transmitted through the antenna is obtained through distributing the combined signal from the first base station at two ends of a band and distributing the signal from the second base station at the middle of the band.

A different-system same-band antenna-sharing system includes a same band antenna sharing unit, a signal combination device, a first base station and a second base station which is a different system from the first base station.

The first base station is configured to transmit signals through a base station antenna main port and a base station antenna diversity port of the first base station. The signal combination device is configured to filter a signal received from the base station antenna diversity port of the first base station according to a preset first passband range, filter a signal received from the base station antenna main port of the first base station according to a preset second passband range, combine the filtered signal from the base station antenna diversity port of the first base station and the filtered signal from the base station antenna main port of the first base station, and transmit the combined signal to the same band antenna sharing unit through a main port. The second base station is configured to transmit a signal through a base station antenna main port of the second base station to the SASU. The SASU is configured to transmit a signal through the antenna shared by the first base station and the second base station, wherein the signal transmitted through the antenna is obtained through distributing the combined signal from the first base station at two ends of a band and distributing the signal from the second base station at the middle of the band.

According to the embodiments of the present invention, the signal received from a base station antenna diversity port is filtered according to a preset first passband range, the signal received from a base station antenna main port is filtered according to a preset second passband range, the filtered signal from the base station antenna diversity port and the filtered signal from the base station antenna main port are combined, and the combined signal is transmitted through a main port. Therefore, the loss of downlink signal may be reduced, and thus the coverage loss of a base station may be reduced.

### BRIEF DESCRIPTION OF THE DRAWINGS

Fig.1 is a schematic diagram showing the implementation of different-system same-band antenna-sharing in the prior art;
Fig.2 is a schematic diagram showing the structure of a signal combination device according to an embodiment of the present invention;
Fig.3 is a schematic flowchart of a method for signal combination according to an embodiment of the present invention;
Fig.4 is a schematic diagram showing the structure of a signal combination device in which filters are preset in adjacent bands according to an embodiment of the present invention;
Fig.5 is a schematic diagram showing filter frequency allocation according to an embodiment of the present invention;
Fig.6 is a schematic diagram showing a frequency spectrum of signals having passed through a signal combination device according to an embodiment of the present invention; and
Fig.7 is a conceptual diagram of the configuration of different-system same-band antenna-sharing using a signal combination device according to an embodiment of the present invention.

### DETAILED DESCRIPTION

Embodiments of the present invention aim at solving the current problem of causing large coverage loss of a base station for meeting the different-system same-band antenna-sharing scheme in the prior art. To solve the above problem, embodiments of the present invention filter a signal received from a base station antenna diversity port according to a preset first passband range, filter a signal received from a base station antenna main port according to a preset second passband range, combine the filtered signal from the base station antenna diversity port and the filtered signal from the base station antenna main port, and transmit the combined signal through a main port.

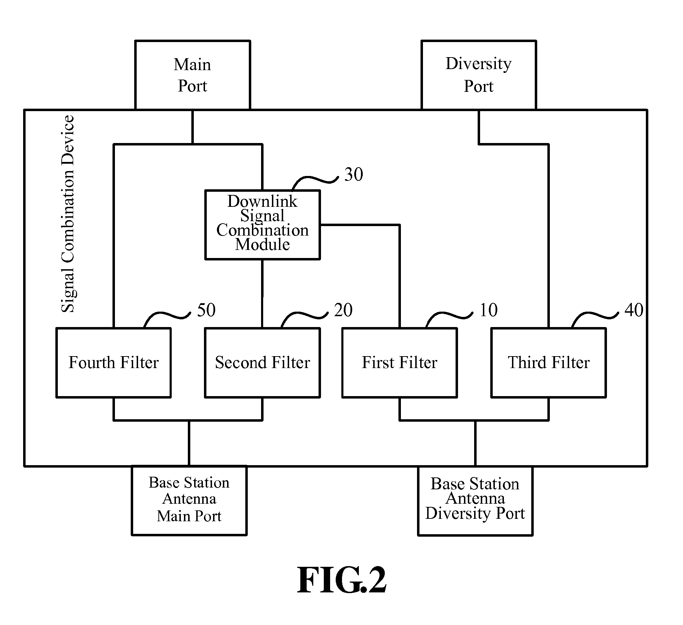

As shown in Fig.2, a signal combination device according to an embodiment of the present invention includes a first filter 10, a second filter 20 and a downlink signal combination module 30.

The first filter 10 filters a signal received from a base station antenna diversity port according to a preset first passband range so as to extract a downlink signal of the antenna diversity port.

The second filter 20 filters a signal received from a base station antenna main port according to a preset second passband range so as to extract a downlink signal of the antenna main port.

The downlink signal combination module 30 combines the signal filtered by the first filter 10 and the signal filtered by the second filter 20, and transmits the combined signal through a main port.

The downlink signal combination module 30 may be a T connector.

According to an embodiment of the present invention, the signal combination device may further include a third filter 40.

The third filter 40 filters a signal transmitted from a diversity port to the base station antenna diversity port according to a preset third passband range so as to extract an uplink signal of the diversity port.

Because the third filter 40 may extract the uplink signal of the diversity port, the efficiency for the signal combination device to receive an uplink signal is increased.

According to an embodiment of the present invention, the signal combination device may further include a fourth filter 50.

The fourth filter 50 filters a signal transmitted from the main port to the base station antenna main port according to a preset fourth passband range so as to extract an uplink signal of the main port.

The filters in the signal combination device may be band-pass filters or low-pass filters and may have a cavity, coaxial line or micro-strip structure.

Coverage band of the passband ranges of the filters in the signal combination device may vary according to application environments.

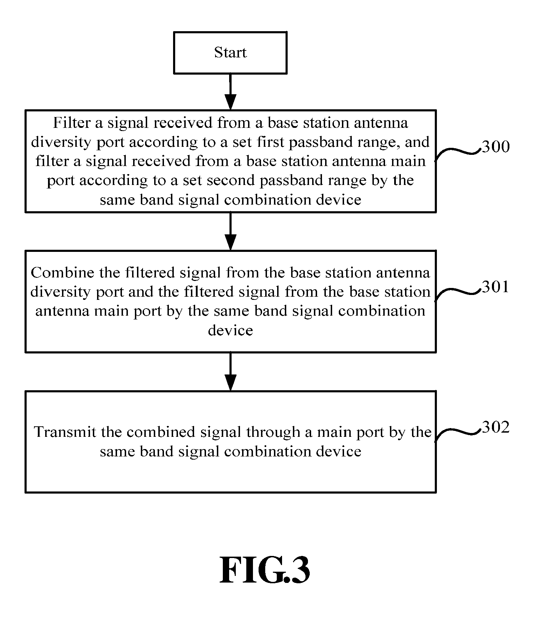

As shown in Fig.3, a method for signal combination according to an embodiment of the present invention includes the following steps.

Step 300: A signal combination device filters a signal received from a base station antenna diversity port according to a preset first passband range so as to extract a downlink signal of the antenna diversity port, and filters a signal received from a base station antenna main port according to a preset second passband range so as to extract a downlink signal of the antenna main port.

Step 301: The signal combination device combines the filtered signal from the base station antenna diversity port and the filtered signal from the base station antenna main port.

Step 302: The signal combination device transmits the combined signal through a main port.

In Step 300, the signal combination device may further filter a signal transmitted from a diversity port to the base station antenna diversity port according to a preset third passband range so as to extract an uplink signal of the diversity port.

The signal combination device may further filter a signal transmitted from the main port to the base station antenna main port according to a preset fourth passband range so as to extract an uplink signal of the main port.

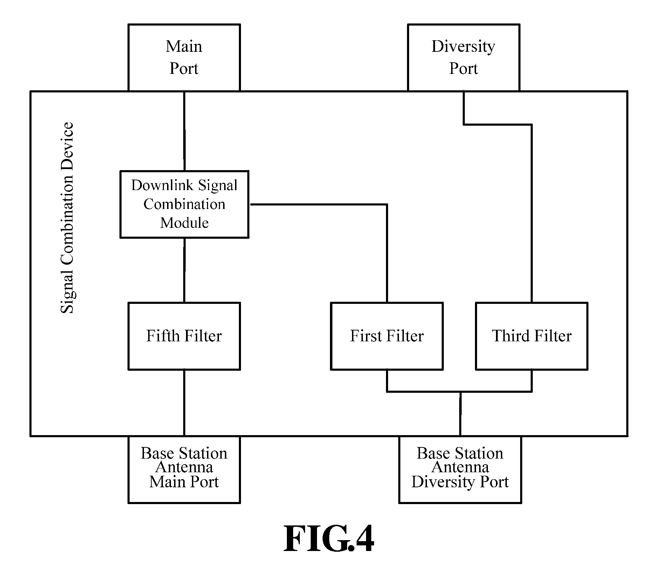

As shown in Fig.4, in a signal combination device in which filters are preset in adjacent bands according to an embodiment of the present invention, it is assumed that a first passband range of a first filter and a second passband range of a second filter are preset in downlink band, and a third passband range of a third filter and a fourth passband range of a fourth filter are preset in uplink band. If the second passband range and the fourth passband range are in adjacent bands, the second filter and the fourth filter may be arranged in the same physical entity.

If the functions of the second filter and the fourth filter are integrated into a fifth filter, it is possible to implement the functions of the second filter and the fourth filter only by the fifth filter. The passband range of the fifth filter is partially located in the downlink band and partially located in the uplink band.

The fifth filter filters a signal received from a base station antenna main port according to the preset second passband range so as to extract a downlink signal of the antenna main port, and filters a signal transmitted from a main port to the base station antenna main port according to the preset fourth passband range so as to extract an uplink signal of the main port.

Through this configuration, one filter may be omitted from the signal combination device, thus saving resources.

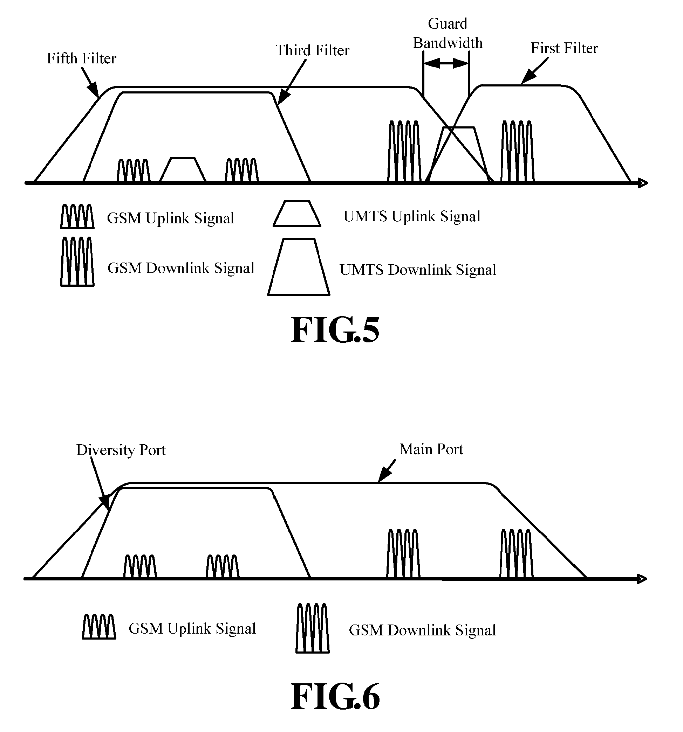

As shown in Fig.5, which is a schematic diagram showing filter frequency allocation according to an embodiment of the present invention, passband ranges of the first, third and fifth filters are allocated according to the bands preset in Fig.4. It is assumed that in different-system same-band antenna-sharing, two systems are the GSM and UMTS respectively, the passband range of the first filter is in downlink band, the passband range of the third filter is in uplink band, and the passband range of the fifth filter is partially located in the uplink band and partially located in the downlink band.

When configuring the filters, guard bandwidth with a certain interval should be reserved between any two filters in order to facilitate implementation. For the purpose of avoiding the waste of this part of bandwidth, GSM signals are allocated to two ends of the bands and the guard bandwidth is allocated for UMTS signals.

As shown in Fig.6, which is a schematic diagram showing frequency spectrum of signals having passed through a signal combination device according to an embodiment of the present invention, downlink signals are all combined into a main port and only uplink signal passes through a diversity port, thus meeting the requirements of different-system same-band antenna-sharing.

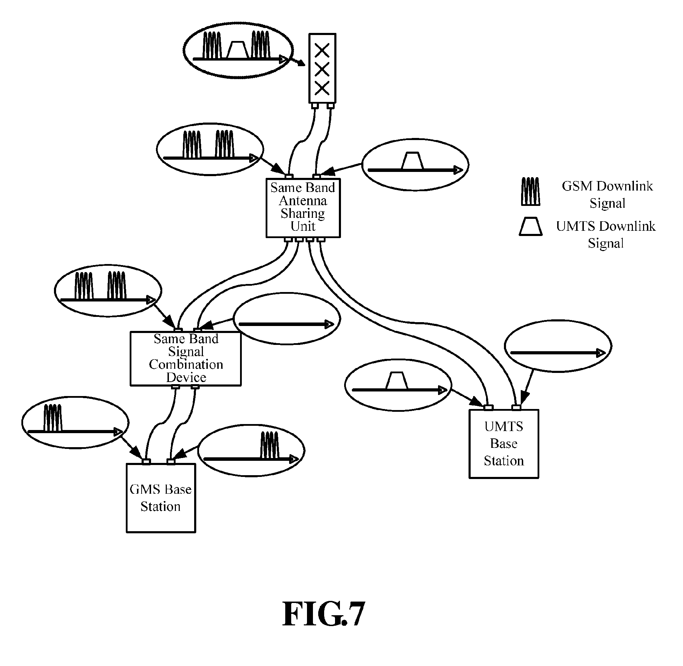

As shown in Fig.7, which is a conceptual diagram of the configuration of different-system same-band antenna-sharing using a signal combination device according to an embodiment of the present invention, two base stations are GSM base station and UMTS base station respectively.

The GSM base station transmits signals through an antenna main port and an antenna diversity port.

The signal combination device filters a signal received from the GSM base station antenna diversity port according to a preset first passband range, filters a signal received from the GSM base station antenna main port according to a preset second passband range, combines the filtered signal from the GSM base station antenna diversity port and the filtered signal from the GSM base station antenna main port, and transmits the combined signal to a SASU through a main port.

The UMTS transmits a signal of the antenna main port to the SASU. The SASU distributes GSM downlink signals at two ends of a band, distributes UMTS downlink signals at the middle of the band, and transmits the signals.

The signal combination device may further filter a signal transmitted from a diversity port to the GSM base station antenna diversity port according to a preset third passband range, and filters a signal transmitted from the main port to the GSM base station antenna main port according to a preset fourth passband range.

If downlink signals occur in the antenna main port and the antenna diversity port of the UMTS at the same time, a signal combination device may be added at the UMTS antenna. The added signal combination device combines a downlink signal of the UMTS antenna main port and a downlink signal of the UMTS antenna diversity port into one signal and transmits the signal to the SASU.

This configuration may combine signals only by directly installing a signal combination device to an antenna port of a base station, without reconfiguring the base station.

As can be seen from the above, in the embodiments of the present invention, the signal received from a base station antenna diversity port is filtered according to a preset first passband range, the signal received from a base station antenna main port is filtered according to a preset second passband range, the filtered signal from the base station antenna diversity port and the filtered signal from the base station antenna main port are combined, and the combined signal is transmitted through a main port. Therefore, the loss of downlink signal may be reduced, the coverage loss of a base station may be reduced, and the efficiency for the signal combination device to receive an uplink signal may be increased. According to the embodiments, signals may be combined only by directly installing a signal combination device to an antenna port of a base station, without reconfiguring the base station.

## Claims

1. A method for signal combination, **characterized by**:
receiving, by a signal combination device, signals through a base station antenna main port and a base station antenna diversity port of a first base station;
filtering (300), by the signal combination device, a signal received from the base station antenna diversity port of the first base station according to a preset first passband range;
filtering (300), by the signal combination device, a signal received from the base station antenna main port of the first base station according to a preset second passband range;
combining (301), by the signal combination device, the filtered signal from the base station antenna diversity port of the first base station and the filtered signal from the base station antenna main port of the first base station, and transmitting (302), by the signal combination device, the combined signal through a main port to a same band antenna sharing unit, SASU;
receiving, by the SASU, a signal from a second base station through a base station antenna main port of the second base station, wherein the second base station employs a different communication system than the first base station; and
transmitting, by the SASU, a signal through an antenna shared by the first base station and the second base station, wherein the signal transmitted through the antenna is obtained through distributing the combined signal from the first base station at two ends of a band and distributing the signal from the second base station at the middle of the band.

2. The method of claim 1, further comprising: filtering, by the signal combination device, a signal transmitted from a diversity port to the base station antenna diversity port of the first base station according to a preset third passband range.

3. The method of claim 1, further comprising: filtering, by the signal combination device, a signal transmitted from the main port to the base station antenna main port of the first base station according to a preset fourth passband range.

4. The method of any one of claims 1 to 3, wherein the first base station is a GSM base station, the second base station is a UMTS base station, the base station antenna diversity port of the first base station is a GSM base station antenna diversity port, the base station antenna main port of the first base station is a GSM base station antenna main port, and a base station antenna main port of the second base station is a UMTS base station antenna main port.

5. A different-system same-band antenna-sharing system, comprising a same band antenna sharing unit, SASU, a signal combination device, a first base station and a second base station, the second base station employing a different communication system than the first base station, wherein
the first base station, configured to transmit signals through a base station antenna main port and a base station antenna diversity port of the first base station; and
the signal combination device, configured to filter a signal received from the base station antenna diversity port of the first base station according to a preset first passband range, filter a signal received from the base station antenna main port of the first base station according to a preset second passband range, combine the filtered signal from the base station antenna diversity port of the first base station and the filtered signal from the base station antenna main port of the first base station, and transmit the combined signal to the same band antenna sharing unit, SASU, through a main port;
the second base station, configured to transmit a signal through a base station antenna main port of the second base station to the SASU;
the SASU, configured to transmit a signal through an antenna shared by the first base station and the second base station, wherein the signal transmitted through the antenna is obtained through distributing the combined signal from the first base station at two ends of a band and distributing the signal from the second base station at the middle of the band.

6. The system of claim 5, wherein the signal combination device is further configured to filter a signal transmitted from a diversity port to the base station antenna diversity port of the first base station according to a preset third passband range.

7. The system of claim 5, wherein the signal combination device is further configured to filter a signal transmitted from the main port to the base station antenna main port of the first base station according to a preset fourth passband range.

8. The method of any one of claims 5 to 7, wherein the first base station is a GSM base station, the second base station is a UMTS base station, the base station antenna diversity port of the first base station is a GSM base station antenna diversity port, the base station antenna main port of the first base station is a GSM base station antenna main port, and a base station antenna main port of the second base station is a UMTS base station antenna main port.

## Patentansprüche

1. Verfahren zur Signalkombinierung, **gekennzeichnet durch**:
Empfangen **durch** eine Signalkombinierungsvorrichtung von Signalen über einen Basisstationsantennenhauptanschluss und einen Basisstationsantennen-Diversity-Anschluss einer ersten Basisstation;
Filtern (300) **durch** die Signalkombinierungsvorrichtung eines Signals, das von dem Basisstationsantennen-Diversity-Anschluss der ersten Basisstation empfangen wird, gemäß einem voreingestellten ersten Durchlassbandbereich;
Filtern (300) **durch** die Signalkombinierungsvorrichtung eines Signals, das von dem Basisstationsantennenhauptanschluss der ersten Basisstation empfangen wird, gemäß einem voreingestellten zweiten Durchlassbandbereich;
Kombinieren (301) **durch** die Signalkombinierungsvorrichtung des gefilterten Signals von dem Basisstationsantennen-Diversity-Anschluss der ersten Basisstation und des gefilterten Signals von dem Basisstationsantennenhauptanschluss der ersten Basisstation und Senden (302) **durch** die Signalkombinierungsvorrichtung des kombinierten Signals über einen Hauptanschluss zu einer Einheit zum gemeinsamen Verwenden desselben Bands einer Antenne, SASU;
Empfangen **durch** die SASU eines Signals von einer zweiten Basisstation über einen Basisstationsantennenhauptanschluss der zweiten Basisstation, wobei die zweite Basisstation ein anderes Kommunikationssystem einsetzt als die erste Basisstation; und
Senden **durch** die SASU eines Signals über eine Antenne, die **durch** die erste Basisstation und die zweite Basisstation gemeinsam verwendet wird, wobei das Signal, das über die Antenne gesendet wird, **durch** Verteilen des kombinierten Signals von der ersten Basisstation an zwei Enden eines Bands und Verteilen des Signals von der zweiten Basisstation in der Mitte des Bands erhalten wird.

2. Verfahren nach Anspruch 1, das ferner Folgendes umfasst: Filtern durch die Signalkombinierungsvorrichtung eines Signals, das von einem Diversity-Anschluss zu dem Basisstationsantennen-Diversity-Anschluss der ersten Basisstation gesendet wird, gemäß einem voreingestellten dritten Durchlassbandbereich.

3. Verfahren nach Anspruch 1, das ferner Folgendes umfasst: Filtern durch die Signalkombinierungsvorrichtung eines Signals, das von dem Hauptanschluss zu dem Basisstationsantennenhauptanschluss der ersten Basisstation gesendet wird, gemäß einem voreingestellten vierten Durchlassbandbereich.

4. Verfahren nach einem der Ansprüche 1 bis 3, wobei die erste Basisstation eine GSM-Basisstation ist, die zweite Basisstation eine UMTS-Basisstation ist, der Basisstationsantennen-Diversity-Anschluss der ersten Basisstation ein GSM-Basisstationsantennen-Diversity-Anschluss ist, der Basisstationsantennenhauptanschluss der ersten Basisstation ein GSM-Basisstationsantennenhauptanschluss ist und ein Basisstationsantennenhauptanschluss der zweiten Basisstation ein UMTS-Basisstationsantennenhauptanschluss ist.

5. System zum gemeinsamen Verwenden von Antennen in unterschiedlichen Systemen in demselben Band, das eine Einheit zum gemeinsamen Verwenden desselben Bands einer Antenne, SASU, eine Signalkombinierungsvorrichtung, eine erste Basisstation und eine zweite Basisstation umfasst, wobei die zweite Basisstation ein anderes Kommunikationssystem einsetzt als die erste Basisstation, wobei
die erste Basisstation konfiguriert ist, Signale über einen Basisstationsantennenhauptanschluss und einen Basisstationsantennen-Diversity-Anschluss der ersten Basisstation zu senden; und
die Signalkombinierungsvorrichtung konfiguriert ist, ein Signal, das von dem Basisstationsantennen-Diversity-Anschluss der ersten Basisstation empfangen wird, gemäß einem voreingestellten ersten Durchlassbandbereich zu filtern, ein Signal, das von dem Basisstationsantennenhauptanschluss der ersten Basisstation empfangen wird, gemäß einem voreingestellten zweiten Durchlassbandbereich zu filtern, das gefilterte Signal von dem Basisstationsantennen-Diversity-Anschluss der ersten Basisstation und das gefilterte Signal von dem Basisstationsantennenhauptanschluss der ersten Basisstation zu kombinieren und das kombinierte Signal über einen Hauptanschluss zu einer Einheit zum gemeinsamen Verwenden desselben Bonds einer Antenne, SASU, zu senden;
die zweite Basisstation konfiguriert ist, ein Signal über den Basisstationsantennenhauptanschluss der zweiten Basisstation zu der SASU zu senden;
die SASU konfiguriert ist, ein Signal über eine Antenne, die durch die erste Basisstation und die zweite Basisstation gemeinsam verwendet wird, zu senden, wobei das Signal, das über die Antenne gesendet wird, durch Verteilen des kombinierten Signals von der ersten Basisstation an zwei Enden eines Bands und Verteilen des Signals von der zweiten Basisstation in der Mitte des Bands erhalten wird.

6. System nach Anspruch 5, wobei die Signalkombinierungsvorrichtung ferner konfiguriert ist, ein Signal, das von einem Diversity-Anschluss zu dem Basisstationsantennen-Diversity-Anschluss der ersten Basisstation gesendet wird, gemäß einem voreingestellten dritten Durchlassbandbereich zu filtern.

7. System nach Anspruch 5, wobei die Signalkombinierungsvorrichtung ferner konfiguriert ist, ein Signal, das von dem Hauptanschluss zu dem Basisstationsantennenhauptanschluss der ersten Basisstation gesendet wird, gemäß einem voreingestellten vierten Durchlassbandbereich zu filtern.

8. Verfahren nach einem der Ansprüche 5 bis 7, wobei die erste Basisstation eine GSM-Basisstation ist, die zweite Basisstation eine UMTS-Basisstation ist, der Basisstationsantennen-Diversity-Anschluss der ersten Basisstation ein GSM-Basisstationsantennen-Diversity-Anschluss ist, der Basisstationsantennenhauptanschluss der ersten Basisstation ein GSM-Basisstationsantennenhauptanschluss ist und ein Basisstationsantennenhauptanschluss der zweiten Basisstation ein UMTS-Basisstationsantennenhauptanschluss ist.

## Revendications

1. Procédé de combinaison de signaux, **caractérisé par** les étapes consistant à :
faire recevoir, par un dispositif de combinaison de signaux, des signaux via un port principal d'antenne de station de base et un port de diversité d'antenne de station de base d'une première station de base ;
faire filtrer (300), par le dispositif de combinaison de signaux, un signal reçu en provenance du port de diversité d'antenne de station de base de la première station de base selon une première étendue prédéfinie de bande passante ;
faire filtrer (300), par le dispositif de combinaison de signaux, un signal reçu en provenance du port principal d'antenne de station de base de la première station de base selon une deuxième étendue prédéfinie de bande passante ;
faire combiner (301), par le dispositif de combinaison de signaux, le signal filtré provenant du port de diversité d'antenne de station de base de la première station de base et le signal filtré provenant du port principal d'antenne de station de base de la première station de base, et faire envoyer (302), par le dispositif de combinaison de signaux, le signal combiné via un port principal à une unité à partage d'antenne de même bande, SASU ;
faire recevoir, par la SASU, un signal provenant d'une deuxième station de base via un port principal d'antenne de station de base de la deuxième station de base, la deuxième station de base employant un système de communication différent de celui de la première station de base ; et
faire envoyer, par la SASU, un signal via une antenne partagée par la première station de base et la deuxième station de base, le signal émis via l'antenne étant obtenu en répartissant le signal combiné provenant de la première station de base à deux extrémités d'une bande et en répartissant le signal provenant de la deuxième station de base au milieu de la bande.

2. Procédé selon la revendication 1, comportant en outre l'étape consistant à : faire filtrer, par le dispositif de combinaison de signaux, un signal émis d'un port de diversité vers le port de diversité d'antenne de station de base de la première station de base selon une troisième étendue prédéfinie de bande passante.

3. Procédé selon la revendication 1, comportant en outre l'étape consistant à: faire filtrer, par le dispositif de combinaison de signaux, un signal émis du port principal vers le port principal d'antenne de station de base de la première station de base selon une quatrième étendue prédéfinie de bande passante.

4. Procédé selon l'une quelconque des revendications 1 à 3, la première station de base étant une station de base GSM, la deuxième station de base étant une station de base UMTS, le port de diversité d'antenne de station de base de la première station de base étant un port de diversité d'antenne de station de base GSM, le port principal d'antenne de station de base de la première station de base étant un port principal d'antenne de station de base GSM, et un port principal d'antenne de station de base de la deuxième station de base étant un port principal d'antenne de station de base UMTS.

5. Système à partage d'antenne de même bande avec systèmes différents, comportant une unité à partage d'antenne de même bande, SASU, un dispositif de combinaison de signaux, une première station de base et une deuxième station de base, la deuxième station de base employant un système de communication différent de celui de la première station de base,
la première station de base étant configurée pour envoyer des signaux via un port principal d'antenne de station de base et un port de diversité d'antenne de station de base de la première station de base ; et
le dispositif de combinaison de signaux étant configuré pour filtrer un signal reçu en provenance du port de diversité d'antenne de station de base de la première station de base selon une première étendue prédéfinie de bande passante, filtrer un signal reçu en provenance du port principal d'antenne de station de base de la première station de base selon une deuxième étendue prédéfinie de bande passante, combiner le signal filtré provenant du port de diversité d'antenne de station de base de la première station de base et le signal filtré provenant du port principal d'antenne de station de base de la première station de base, et envoyer le signal combiné à l'unité à partage d'antenne de même bande, SASU, via un port principal ;
la deuxième station de base étant configurée pour envoyer un signal via un port principal d'antenne de station de base de la deuxième station de base vers la SASU ; la SASU étant configurée pour envoyer un signal via une antenne partagée par la première station de base et la deuxième station de base, le signal émis via l'antenne étant obtenu en répartissant le signal combiné provenant de la première station de base à deux extrémités d'une bande et en répartissant le signal provenant de la deuxième station de base au milieu de la bande.

6. Système selon la revendication 5, le dispositif de combinaison de signaux étant en outre configuré pour filtrer un signal émis d'un port de diversité vers le port de diversité d'antenne de station de base de la première station de base selon une troisième étendue prédéfinie de bande passante.

7. Système selon la revendication 5, le dispositif de combinaison de signaux étant en outre configuré pour filtrer un signal émis du port principal vers le port principal d'antenne de station de base de la première station de base selon une quatrième étendue prédéfinie de bande passante.

8. Procédé selon l'une quelconque des revendications 5 à 7, la première station de base étant une station de base GSM, la deuxième station de base étant une station de base UMTS, le port de diversité d'antenne de station de base de la première station de base étant un port de diversité d'antenne de station de base GSM, le port principal d'antenne de station de base de la première station de base étant un port principal d'antenne de station de base GSM, et un port principal d'antenne de station de base de la deuxième station de base étant un port principal d'antenne de station de base UMTS.
